Europäisches Patentamt

European Patent Office

Office européen des brevets

(19)

(11) Veröffentlichungsnummer : **0 129 232**
**B1**

# (12) EUROPÄISCHE PATENTSCHRIFT

(45) Veröffentlichungstag der Patentschrift :
**15.03.89**

(21) Anmeldenummer : **84106925.5**

(22) Anmeldetag : **16.06.84**

(51) Int. Cl.⁴ : **G 01 F 15/06**, G 01 F   3/10,
H 02 N 11/00

(54) **Elektromagnetischer Impulsaufnehmer für Durchflussmesser.**

(30) Priorität : **18.06.83 DE 3321952**

(43) Veröffentlichungstag der Anmeldung :
**27.12.84 Patentblatt 84/52**

(45) Bekanntmachung des Hinweises auf die Patenter-
teilung : **15.03.89 Patentblatt 89/11**

(84) Benannte Vertragsstaaten :
**AT BE CH FR GB IT LI NL**

(56) Entgegenhaltungen :
**EP—A— 0 035 466**
**DE—A— 2 826 609**
**DE—A— 2 906 795**
**GB—A— 2 074 389**
**PATENTS ABSTRACTS OF JAPAN, Band 7, Nr. 241 (P-**
**232)[1386], 26. Oktober 1983; JP - A - 58 127 125**

(73) Patentinhaber : **BOPP & REUTHER GMBH**
**Carl-Reuther-Strasse 1**
**D-6800 Mannheim 31 (DE)**

(72) Erfinder : **Böhm, Jürgen, Dr. Ing.**
**Krautheimerstrasse 11**
**D-6800 Mannheim-Wallstadt (DE)**
Erfinder : **Jerger, Walter, Dipl.-Ing.**
**Glücksburger Weg 258**
**D-6800 Mannheim 31 (DE)**

## Beschreibung

Die Erfindung bezieht sich auf einen elektromagnetischen Impulsaufnehmer für Durchflußmesser, insbesondere kleiner Nennweite, bei dem ein in der Meßkammer umlaufendes Meßrad eine Magneteinrichtung mit zu einer Meßkammerstirnwand gerichteten Polflächen trägt und in dem angrenzenden Raum außerhalb der magnetisch nichtleitenden Meßkammerstirnwand ein « Wiegand »-Sensor feststehend angeordnet ist, wobei bei jeder Umdrehung des Meßrades magnetische Impulse erzeugt werden, die in einer Aufnehmerspule elektrische Spannungsimpulse erzeugen, deren Anzahl ein Maß für das durch den Durchflußmesser geströmte Meßmedium ist.

Ein solcher Impulsaufnehmer ist aus der DE-OS 30 46 804 bekannt geworden, die einen « Wiegand »-Sensor für Flügelradzähler in Trockenläuferbauart zeigt, bei dem ein in die Nabe des Flügelrades eingesetzter und mit dem Flügelrad umlaufender Ringmagnet auf einen einzigen, außerhalb einer Trennwand gelegenen und von einer Spule umwickelten « Wiegand »-Draht wirkt, der quer zur Flügelradachse liegt und diese Achse kreuzt. Nachteilig hierbei ist, daß bei jeder Meßradumdrehung nur ein Impuls abgegeben wird, so daß die Meßwertauflösung nur sehr gering ist. Außerdem läßt sich ein solcher Ringmagnet nicht in Durchflußmesser sehr kleiner Nennweite einbauen, da die Abmessungen sehr kleiner Meßräder sogar die Abmessungen des erforderlichen Ringmagneten unterschreiten können, so daß der Ringmagnet dann als separater Rotor vom Meßrad angetrieben werden müßte, der die umlaufende Masse zusätzlich stark erhöht.

Auch in der Zeitschrift « Elektronik », Heft 7 von 1980 ist auf Seite 45 die Verwendung von « Wiegand »-Drähten für die Abtastung von Durchflußmessern vorgeschlagen worden, wobei empfohlen wurde, eine Anzahl von Wiegand-Drähten auf den Mantel einer besonderen, mit dem Meßrad umlaufenden Abtasttrommel achsparallel anzuordnen und die Spule zusammen mit den Magneten in einer besonderen Baueinheit unterzubringen, die im feststehenden Teil des Durchflußmessers im Bereich des Abtasttrommelmantels außen am Gehäusemantel eingebaut werden muß. Nachteilig hierbei ist, daß die für die Unterbringung und Kapselung der Wiegand-Drähte erforderliche Abtasttrommel einerseits im Zählernaßraum umlaufen muß und andererseits zusätzlichen Bauraum erfordert. Insbesondere stellt diese zusätzliche Abtasttrommel auch eine den Umlauf bremsende große Umlaufmasse dar. Außerdem muß hier die plötzliche Polaritätsänderung der Wiegand-Drähte über einen relativ großen Abstand durch den Durchflußmessergehäusemantel hindurch nach außen auf die feststehende Spule übertragen werden, wodurch sich nur relativ schwache Impulse ergeben. Bei den in der Regel metallischen Zählergehäusen findet noch eine zusätzliche Bedämpfung des Wiegand-Impulses statt. Für den Einbau in Durchflußmesser kleiner Nennweite ist dieser Impulsaufnehmer ungeeignet, weil die zusätzliche, die Wiegand-Drähte tragende Abtasttrommel im Verhältnis zum Meßrad viel zu groß werden und damit eine kompakte Zählerbauweise unmöglich machen würde.

Aufgabe der Erfindung ist es, einen Wiegand-Sensor als Impulsaufnehmer für Durchflußmesser insbesondere kleiner Nennweite so auszubilden, daß er in einfachster Weise und mit geringsten, die Meßeigenschaften nicht nachteilig beeinflussenden konstruktiven Änderungen in erprobte Durchflußmesser kompakter Bauweise eingebaut werden kann und eine hohe Impulsauflösung mit starken Einzelimpulsen gewährleistet.

Die Lösung dieser Aufgabe wird in den Merkmalen des Anspruchs 1 gesehen.

Dadurch, daß im Meßrad zwei relativ weit voneinander entfernt angeordnete Einzelmagnete eingebaut sind, die mit den auf dem Außenmantel des feststehenden Aufnehmerzylinders liegenden Wiegand-Drähten fluchten, ergibt sich für den Aufnehmerzylinder der größtmöglichste Durchmesser, so daß auf dem Zylindermantel eine große Anzahl von Wiegand-Drähten untergebracht werden kann, die pro Umdrehung des Meßrades eine große Anzahl von Impulsen erzeugen, wodurch sich eine sehr hohe Meßwertauflösung ergibt. Da die Wiegand Drähte parallel zur Drehachse des Meßrades liegen und auf der vom Meßrad abgewandten Seite an einem Polring anliegen, verläuft der Hauptteil der Feldlinien des sich zwischen den Polflächen der Einzelmagnete ausgebildeten Magnetfeldes jetzt von der Polfläche des einen Magneten durch die Trennwand und dann längs der im Wirkbereich dieses Magneten liegenden Wiegand-Drähte weiter zum Polring, in dem sie durch Ringschluß in den Wirkbereich des anderen Magneten gelangen, so daß die Feldlinien hier längs der im Wirkbereich dieses Magneten liegenden Wiegand-Drähte durch die Trennwand in die Polfläche des anderen Magneten eintreten.

Durch diese axiale Streckung des Magnetfeldes über den Polring werden die Wiegand-Drähte über eine wesentlich größere Länge vom Magnetfeld beaufschlagt, als dies ohne den Polring der Fall wäre, da sich die Feldlinien dann den widerstandsärmsten Weg durch den magnetisch nichtleitenden Raum zwischen den beiden Magneten suchen würden. Durch die magnetische Beaufschlagung eines wesentlich größeren Wiegand-Draht-Abschnittes wird ein hoher magnetischer Impuls in den Wiegand-Drähten erzeugt, der in der in unmittelbarer Nähe konzentrisch zu den Wiegand-Drähten angeordneten Aufnehmerspule eine hohe Signalspannung erzeugt.

Eine konstruktiv einfache Anordnung von Wiegand-Drähten und Aufnehmerspule ergibt sich durch die Merkmale des Anspruchs 2, wobei durch die unmittelbar innerhalb des durch die Wiegand-Drähte gebildeten Kreiszylinders liegende Aufnehmerspule einerseits der Durchmesser des Aufnehmerzylinders bei maximaler Ausnutzung der Mantelfläche in bezug auf die unterzubringende Zahl der Wiegand-Drähte klein gehalten werden kann und andererseits die Aufnehmerspule im unmittelbaren Wirkungsbereich der Wiegand-Drähte zu liegen kommt.

Die Wiegand-Drähte werden in einfacher Weise dadurch in den Längsnuten des Aufnehmerzylinders gehalten, daß sie entsprechend dem Anspruch 3 in die Längsnuten eingeklemmt, eingeklebt oder mit der Aufnehmerspule vergossen sind.

Da die Wiegand-Drähte entsprechend den Merkmalen des Anspruchs 4 bis an die magnetseitige Stirnfläche des Aufnehmerzylinders reichen, der in einer Zylinderausnehmung der Meßkammerstirnwand bis zum dünnwandigen Boden eingeschoben ist, werden die Wiegand-Drähte so dicht wie nur möglich an die beiden Einzelmagnete herangeführt, wodurch eine ausreichende magnetische Beaufschlagung der Wiegand-Drähte auch bei Verwendung kleiner Einzelmagnete erzielt wird. Insbesondere bei kleinen Zählernennweiten steht häufig kein Raum zum Einbau größerer Magnete in das Meßrad zur Verfügung, so daß erst durch diese Ausbildung eine sichere Abtastung auch kleinster Meßräder möglich wird.

Wird die Aufnehmerspule nach den Merkmalen des Anspruchs 5 bis nahe an die magnetseitige Stirnfläche des Aufnehmerzylinders herangeführt und der Polring auf der gegenüberliegenden Seite so auf den Außenmantel des Aufnehmerzylinders aufgeschoben, daß er nur den äußeren Bereich der Wiegand-Drähte eng emhüllt, wird das sich zwischen dem Polring und den Einzelmagneten ausbildende Magnetfeld besonders stark in Längsrichtung auf die Wiegand-Drähte konzentriert, so daß starke magnetische Einzelimpulse erzeugt werden. Auch bildet der Polring eine Halterung für die in den Langsnuten des Zylindermantels liegenden Wiegand-Drähte und kann als Montagehilfe für die Wiegand-Drähte benutzt werden. Der Aufnehmerzylinder bildet hierbei zusammen mit den Wiegand-Drähten, der Aufnehmerspule und dem Polring eine leicht in die Zylinderausnehmung der Meßkammerstirnwand einschiebbare kompakte Baueinheit.

Durch die Einkapselung der beiden Einzelmagnete nach Anspruch 6 unterliegen die mit dem Impulsaufnehmer ausgerüsteten Durchflußmesser keiner Beschränkung hinsichtlich der zu verwendenden Durchflußmedien, so daß sich der Impulsaufnehmer auch bei stark agressiven Medien einsetzen läßt.

Damit der erfindungsgemäße Impulsaufnehmer auch bei Ovalradzählern, bei denen das die beiden Einzelmagnete tragende Meßrad ungleichförmig umläuft, innerhalb jeder Umdrehung eine Anzahl zeitgleicher Einzelimpulse abgibt, bzw. bei gleichbleibendem Durchfluß auch eine gleichbleibende Frequenz innerhalb jeder Umdrehung des Meßrades erzeugt, wird gemäß Anspruch 7 vorgeschlagen, die Wiegand-Drähte mit einer ungleichen, den ungleichförmigen Umlauf des Meßrades ausgleichenden Teilung auf den Außenmantel des Aufnehmerzylinders aufzubringen. Dies ist besonders von Bedeutung bei Durchflußmeßanlagen, bei denen die abgegebenen Impulse zu Regelzwecken verwendet werden und hierfür eine genügend hohe und auch innerhalb einer Meßradumdrehung konstante Frequenz erforderlich ist.

Die Erfindung wird anhand von Ausführungsbeispielen näher in der Zeichnung erläutert, und zwar zeigen :

Fig. 1    einen Ovalradzähler kleiner Nennweite mit dem erfindungsgemäßen Impulsaufnehmer im Längsschnitt durch die Achse des abgegriffenen Meßrades und des Aufnehmerzylinders in stark vergrößertem Maßstab,

Fig. 2    den Ovalradzähler nach Fig. 1 mit Blick auf die Meßkammer und die beiden Ovalräder,

Fig. 3    einen Ausschnitt des Aufnehmerzylinders mit mehreren in Längsnuten des Außenmantels eingelegten Wiegand-Drähten und

Fig. 4    eine ungleichförmige Teilung der am Außenmantel des Aufnehmerzylinders vorgesehenen Wiegand-Drähte.

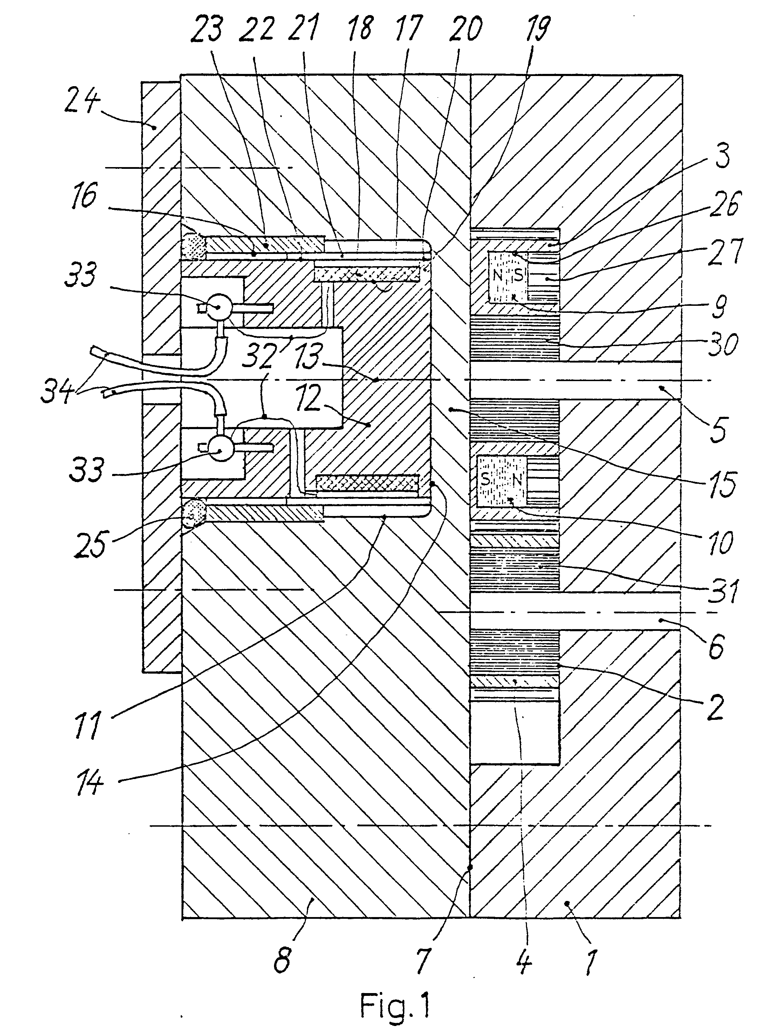

Der in Fig. 1 bis 3 gezeigte Ovalradzähler kleiner Nennweite besteht aus dem Zählergehäuse 1 mit der Meßkammer 2, in der die beiden Ovalräder 3 und 4 auf ihren Achsen 5 und 6 umlaufen. Die Meßkammer 2 ist an ihrer offenen Stirnseite 7 durch den Gehäusedeckel 8 abgeschlossen, der die Meßkammerstirnwand bildet und im Bereich des die Einzelmagnete 9 und 10 tragenden Ovalrades 3 mit einer Zylinderausnehmung 11 versehen ist, in die der Aufnehmerzylinder 12 eingeschoben ist. Die Achse 13 der Zylinderausnehmung 11 und des Aufnehmerzylinders 12 fluchtet hierbei mit der Achse 5 des Ovalrades 3 und die Zylinderausnehmung 11 ist so tief in den Gehäusedeckel 8 eingedreht, daß zwischen der Stirnseite 14 des Aufnehmerzylinders 12 und der Stirnseite 7 der Meßkammer 2 nur noch ein unter Berücksichtigung des stark vergrößerten Maßstabes relativ dünnwandiger Boden 15 verbleibt.

Die beiden Einzelmagnete 9 und 10 liegen im Außenbereich der großen Ovalachse des Ovalrades 3 und der Aufnehmerzylinder 12 ist in seinem Durchmesser so groß gewählt, daß sein Außenmantel 16 im Wirkbereich dieser beiden Einzelmagnete 9 und 10 liegt. Der Aufnehmerzylinder 12 ist an seiner den beiden Magneten 9 und 10 zugekehrten Seite mit einer Ringnut 17 versehen, in die die Aufnehmerspule 18 eingelegt ist. Zwischen der Stirnseite 14 des Aufnehmerzylinders 12 und der Ringnut 17 ist lediglich ein dünner Seitensteg 19 freigelassen, der an seinem Außenmantel die Längsnuten 20 für die hierin gehaltenen Wiegand-Drähte 21 trägt. Auf der anderen Seite der Ringnut 17 sind die äußeren Längsnuten 22 für die Halterung der Außenbereiche der Wiegand-Drähte im Aufnehmerzylinder 12 vorgesehen. Auf der äußeren Seite des Aufnehmerzylinders 12 ist der Polring 23 eng über den Endbereich der Wiegand-Drähte 21 geschoben, der zusammen mit den Wiegand-Drähten 21 und der Aufnehmerspule 18 eine einschiebbare Baueinheit mit dem Aufnehmerzylinder 12 bildet. Diese in die Zylinderausnehmung 11 eingeschobene Baueinheit ist durch die aufgeschraubte Adeckplatte 24 nach außen abgeschlossen und durch den Dichtring 25 abgedichtet.

Die Einzelmagnete 9 und 10 sind jeweils in eine Sackbohrung 26 des Ovalrades 3 eingesetzt, die bis in die Nähe der Meßkammerstirnseite 7 reicht. Zur Abdichtung sind die beiden Sackbohrungen 26 durch Verschlußstopfen 27 abgeschlossen.

Werden die beiden Ovalräder 3 und 4 durch das über den Eintritt 28 in die Meßkammer 2 des Ovalradzählers einströmende und über den Austritt 29 abfließende Medium mit ihren Lagerbüchsen 30, 31 auf den feststehenden Achsen 5 und 6 in Drehung versetzt, so wirkt ein vom Magneten 9 ausgehendes umlaufendes Magnetfeld auf die Wiegand-Drähte 21, das durch den Ringschluß im Polring 23 zur Polfläche des anderen Magneten 10 geleitet wird. Aufgrund dieses sich längs der Wiegand-Drähte 21 erstreckenden magnetischen Feldes werden in den Wiegand-Drähten durch schnelle Polaritätsänderung fortlaufend starke magnetische Impulse erzeugt, die in der Aufnehmerspule 18 starke elektrische Spannungsimpulse auslösen, die über die Spulendrähte 32 und elektrischen Anschlüsse 33 auf die Anschlußkabel 34 übertragen werden.

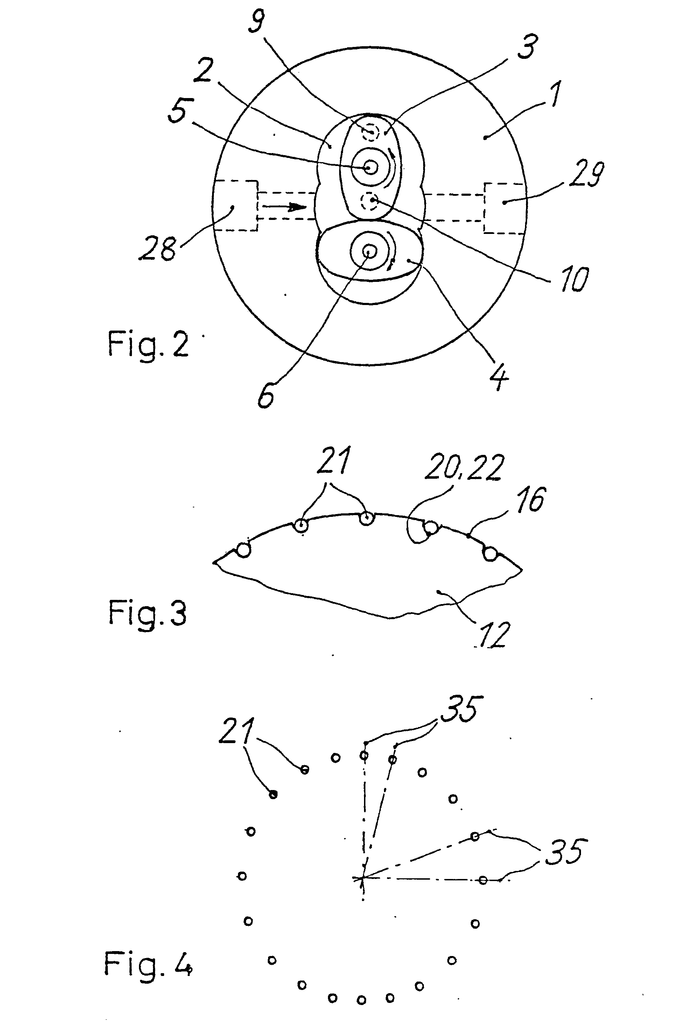

In der Fig. 4 sind die Wiegand-Drähte 21 mit ungleicher Teilung auf dem Außenmantel des Aufnehmerzylinders aufgebracht, damit der ungleichförmige Umlauf der Ovalräder 3 und 4 kompensiert werden kann. Der Winkel zwischen den einzelnen Radien 35 ändert sich hierbei entsprechend dem Ungleichförmigkeitsgrad der Ovalräder während einer Umdrehung jeweils zweimal zwischen einem Kleinstwert und einem Größtwert.

## Patentansprüche

1. Elektromagnetischer Impulsaufnehmer für Durchflußmesser, insbesondere kleiner Nennweite, bei dem ein in einer Meßkammer (2) umlaufendes Meßrad (3) eine Magneteinrichtung (9, 10) mit zu einer Meßkammerstirnwand (15) gerichteten Polflächen trägt und in dem angrenzenden Raum (11) außerhalb der magnetisch nichtleitenden Meßkammerstirnwand (15) ein « Wiegand »-Sensor (21) feststehend angeordnet ist, wobei bei jeder Umdrehung des Meßrades (3) magnetische Impulse erzeugt werden, die in einer Aufnehmerspule (18) elektrische Spannungsimpulse erzeugen, deren Anzahl ein Maß für das durch den Durchflußmesser geströmte Meßmedium ist, dadurch gekennzeichnet, daß die im Meßrad (3) sitzende Magnetanordnung aus zwei im Außenbereich des Meßrades parallel zu dessen Drehachse (5) liegenden und entgegengesetzt gepolten Einzelmagneten (9, 10) besteht und in dem angrenzenden Raum (11) außerhalb der Meßkammerstirnwand (7) ein feststehender koaxial zum Meßrad liegender Aufnehmerzylinder (12) vorgesehen ist, auf dessen im axialen Wirkbereich der beiden Magnete (9, 10) liegenden Außenmantel (16) eine Vielzahl von verteilt angeordneten Wiegand-Drähten (21) parallel oder annähernd parallel zur Drehachse (5) angeordnet ist, wobei die Aufnehmerspule (18) in unmittelbarer Nähe des durch die Wiegand-Drähte (21) gebildeten Kreiszylinders konzentrisch am Aufnehmerzylinder (12) gehalten ist, der auf der von den Magneten (9, 10) abgewandten Seite der Wiegand-Drähte (21) und der Aufnehmerspule (18) einen an den Endbereich der Wiegand-Drähte (21) anschließenden magnetisch leitenden Polring (23) trägt.

2. Impulsaufnehmer nach Anspruch 1, dadurch gekennzeichnet, daß der Aufnehmerzylinder (12) mit einer die Aufnehmerspule (18) tragenden Ringnut (17) versehen ist und der Außenmantel (16) des Aufnehmerzylinders (12) beiderseits der Ringnut Längsnuten (20, 22) trägt, in denen die Wiegand-Drähte (21) unmittelbar über der Aufnehmerspule (18) gehalten sind.

3. Impulsaufnehmer nach Anspruch 2, dadurch gekennzeichnet, daß die Wiegand-Drähte (21) in die Längsnuten (20, 22) eingeklemmt, eingeklebt oder mit der Aufnehmerspule (18) vergossen sind.

4. Impulsaufnehmer nach einem oder mehreren der Ansprüche 1 bis 3, dadurch gekennzeichnet, daß die auf dem Außenmantel (16) des Aufnehmerzylinders (12) vorgesehenen Wiegand-Drähte (21) mit ihren zu den Einzelmagneten (9, 10) zeigenden Enden bis an die Stirnfläche (14) des Aufnehmerzylinders (12) reichen, der in einer mit der Drehachse (5) des Meßrades (3) fluchtenden Zylinderausnehmung (11) der Meßkammerstirnwand (8) bis zum dünnwandigen Boden (15) eingeschoben und gehalten ist.

5. Impulsaufnehmer nach Anspruch 4, dadurch gekennzeichnet, daß die die Aufnehmerspule (18) tragende Ringnut (17) des Aufnehmerzylinders (12) bis auf einen dünnen Seitensteg (19) an die magnetseitige Stirnfläche (14) des Aufnehmerzylinders (12) heranreicht und der Polring (23) auf der von den Einzelmagneten (9, 10) abgewandten äußeren Seite des Außenmantels (16) des Aufnehmerzylinders (12) angeordnet ist und nur den äußeren Bereich der Wiegand-Drähte (21) eng umhüllt.

6. Impulsaufnehmer nach einem oder mehreren der Ansprüche 1 bis 5, dadurch gekennzeichnet, daß die beiden im Außenbereich des Meßrades (3) vorgesehenen Einzelmagnete (9, 10) in von der vom Aufnehmerzylinder (12) abgewandten Seite her in das Meßrad (3) eingebrachte, bis in Nähe der Meßkammerstirnfläche (7) reichende Sackbohrungen (26) eingeschoben und durch Verschlußstopfen (27) dicht nach außen abgeschlossen sind.

7. Impulsaufnehmer nach einem oder mehreren der Ansprüche 1 bis 6 für Ovalradzähler mit innerhalb einer Umdrehung ungleichförmigem Umlauf des mit den Einzelmagneten versehenen Meßrades, dadurch gekennzeichnet, daß die Wiegand-Drähte (21) mit einer ungleichen, den ungleichförmigen Umlauf des Meßrades (3) ausgleichenden Teilung auf dem Außenmantel (16) des Aufnehmerzylinders (12) aufgebracht sind.

## Claims

1. An electromagnetic pulse receiver for flow meters, in particular of small standard width, in which a measuring wheel (3) revolving within a measuring chamber (2) carries a magnet system (9, 10) comprising polar surfaces directed towards a measuring chamber front wall (15) and a « Wiegand » sensor (21) is fixedly installed in the adjacent space (11) outside the magnetically nonconductive measuring chamber side wall (15), magnetic pulses being generated during each revolution of the measuring wheel (3) which within a pickup coil (18) generate electrical voltage pulses, the number of which is a measurement for the measuring medium which has flowed through the flow meter, characterised in that the magnet system situated in the measuring wheel (3) comprises two separate magnets (9, 10) arranged in the outer region of the measuring wheel parallel to its axis (5) of rotation and oppositely polarised, and a fixedly arranged pickup cylinder (12) co-axially positioned with respect to the measuring wheel is provided in the adjacent space (11) outside the measuring chamber front wall (7), the outer surface (16) of which placed within the axial effective range of the two magnets (9, 10) has arranged on it a plurality in parallel or approximately parallel position with respect to the axis (5) of rotation of « Wiegand » wires (21) installed in distributed manner, the pickup coil (18) being secured in direct proximity to the circular cylinder formed by the « Wiegand » wires (21) concentric on the pickup cylinder (12), which at the side of the « Wiegand » wires (21) and of the pickup coil (18) facing away from the magnets (9, 10) carries a magnetically conductive polar ring (23) adjacent to the end region of the « Wiegand » wires (21).

2. Pulse receiver according to claim 1, characterised in that the pickup cylinder (12) is provided with a circular groove (17) carrying the pickup coil (18) and that the outer surface (16) of the pickup cylinder (12) bears longitudinal grooves (20, 22) at either side of the circular groove, in which the « Wiegand » wires (21) are held directly above the pickup coil (18).

3. Pulse receiver according to claim 2, characterised in that the « Wiegand » wires (21) are clamped or bonded into the longitudinal grooves (20, 22) or joined by casting to the pickup coil (18).

4. Pulse receiver according to one or more of the claims 1 to 3, characterised in that the « Wiegand » wires (21) provided on the outer surface (16) of the pickup cylinder (12) extend with their extremities facing towards the separate magnets (9, 10) as far as the front face (14) of the pickup cylinder (12) which is pushed as far as the thin-walled bottom (15) and secured in a cylindrical recess (11) of the measuring chamber front wall (8), said recess being in alignment with the axis (5) of rotation of the measuring wheel (3).

5. Pulse receiver according to claim 4, characterised in that the circular groove (17) carrying the pickup coil (18) of the pickup cylinder (12) extends up to a thin side flange (19) towards the magnet-side front face (14) of the pickup cylinder (12) and the pole ring (23) is situated at the outer side of the outer surface (16) of the pickup cylinder (12) facing away from the individual magnets (9, 10) and closely envelopes only the outer region of the « Wiegand » wires (21).

6. Pulse receiver according to one or more of the claims 1 to 5, characterised in that the two individual magnets (9, 10) provided in the outer region of the measuring wheel (3) are pushed into blind bores (26) formed in the measuring wheel (3) from the side pointing away from the pickup cylinder (12) and extending up to the proximity of the measuring chamber front face (7) and are hermetically shut off from the outside by means of sealing plugs (27).

7. Pulse receiver according to one or more of the claims 1 to 6 for oval wheel counters utilising a non-uniform rotation within one revolution of the measuring wheel provided with the individual magnets, characterised in that the « Wiegand » wires (21) are installed on the outer surface (16) of the pickup cylinder (12) with a non-uniform gradation compensating the non-uniform rotation of the measuring wheel (3).

## Revendications

1. Détecteur électromagnétique d'impulsions pour des débitmètres, notamment ceux possédant une faible section nominale de passage, et dans lequel une roue de mesure (3) tournant à l'intérieur d'une chambre de mesure (2) porte un dispositif à aimants (9, 10) comportant des surfaces polaires dirigées vers une paroi frontale (15) de la chambre de mesure, tandis qu'un capteur « Wiegand » (21) est monté fixe dans la chambre attenante (11), à l'extérieur de la paroi frontale (15) non conductrice magnétiquement de la chambre de mesure, auquel cas, lors de chaque rotation de la roue de mesure (3), il apparaît des impulsions magnétiques qui produisent, dans une bobine de détection (18), des impulsions électriques de tension, dont le nombre est une mesure du milieu à mesurer traversant le débitmètre, caractérisé par le fait que le dispositif à aimants situé dans la roue de mesure (3) est constitué par deux aimants individuels (9, 10) s'étendant parallèlement à l'axe de rotation (5) de la roue de mesure dans la partie extérieure de cette dernière et possédant des polarités opposées, et que dans la chambre attenante (11) et à l'extérieur de la paroi frontale (7) de la chambre de mesure, se trouve disposé un cylindre fixe de détection (12), qui est coaxial à la roue de mesure et dont l'enveloppe extérieure (16), située dans la zone axiale d'action des deux aimants (9, 10), porte une multiplicité de fils de Wiegand (21) disposés d'une manière répartie en étant parallèles ou approximativement parallèles à l'axe de rotation (5), la bobine de détection (18) étant maintenue à proximité immédiate du cylindre circulaire formé par les fils de Wiegand (21) et concentriquement sur le cylindre de détection (12), qui porte un anneau polaire (23) magnétiquement conducteur et se raccordant à la zone d'extrémité des fils de Wiegand (21), sur le côté des fils Wiegand (21) et de la bobine de détection (18), tourné à l'opposé des aimants (9, 10).

2. Détecteur d'impulsions selon la revendication 1, caractérisé en ce que le cylindre de détection (12) est pourvu d'une gorge annulaire (17) portant la bobine de détection (18) et l'enveloppe extérieure (16) du cylindre de détection (12) comporte, des deux côtés de la gorge annulaire, des rainures longitudinales (20, 22), dans lesquelles les fils de Wiegand (21) sont maintenus directement au-dessus de la bobine de détection (18).

3. Détecteur d'impulsions selon la revendication 2, caractérisé en ce que les fils de Wiegand (21) sont fixés par coincement ou collage dans les rainures longitudinales (20, 22) ou sont scellés avec la bobine de détection (18).

4. Détecteur d'impulsions selon une ou plusieurs des revendications 1 à 3, caractérisé en ce que les fils de Wiegand (21) prévus sur l'enveloppe extérieure (16) du cylindre de détection (12) s'étendent, par leurs extrémités tournées vers les aimants individuels (9, 10), jusqu'au niveau de la surface frontale (14) du cylindre de détection (12) qui est inséré dans un évidement cylindrique (11), centré sur l'axe de rotation (5) de la roue de mesure (3), de la paroi frontale (8) de la chambre de mesure jusqu'au fond à paroi mince (15) et y est maintenu.

5. Détecteur d'impulsions selon la revendication 4, caractérisé en ce que la gorge annulaire (17), qui porte la bobine de détection (18), du cylindre de détection (12) s'étend jusqu'à proximité de la surface frontale (14) du cylindre de détection (12), située du côté des aimants, en étant séparée par une mince barrette latérale (19), et l'anneau polaire (23) est disposé sur la face extérieure, tournée à l'opposé des aimants individuels (9, 10), de l'enveloppe extérieure (16) du cylindre de détection (12) et n'enveloppe étroitement que la zone extérieure des fils de Wiegand (21).

6. Détecteur d'impulsions selon une ou plusieurs des revendications 1 à 5, caractérisé en ce que les deux aimants individuels (9, 10) prévus dans la zone extérieure de la roue de mesure (3), sont insérés dans des perçages borgnes (26) ménagés dans la roue de mesure (3) à partir de la face tournée à l'opposé du cylindre de détection (12) et s'étendant jusqu'à proximité de la surface frontale (7) de la chambre de mesure, et sont fermés d'une manière étanche vis-à-vis de l'extérieur par des bouchons (27).

7. Détecteur d'impulsions selon une ou plusieurs des revendications 1 à 6 pour des compteurs à roues ovales, dans lesquels la roue de mesure équipée des aimants individuels a un mouvement non uniforme au cours d'une rotation, caractérisé en ce que les fils de Wiegand (21) sont disposés sur l'enveloppe extérieure (16) du cylindre de détection (12) avec un pas de répartition non uniforme, qui compense le mouvement non uniforme de la roue de mesure (3).

EP 0 129 232 B1

Fig.1

Fig. 2

Fig. 3

Fig. 4